# EUROPEAN PATENT SPECIFICATION

(11) **EP 3 184 982 B1**
(45) Date of publication and mention of the grant of the patent: **25.03.2020**
(21) Application number: 15833752.7
(22) Date of filing: 18.08.2015
(51) Int. Cl.: G01L 19/14, G01L 9/04, G01L 19/00, G01L 9/00, H01R 13/24

(54) **PRESSURE SENSOR**
DRUCKSENSOR
CAPTEUR DE PRESSION

(30) Priority: 19.08.2014 KR 20140107897; 10.10.2014 KR 20140136763; 30.10.2014 KR 20140149216
(43) Date of publication of application: 28.06.2017
(73) Proprietor: Tyco Electronics AMP Korea Co., Ltd., Gyeongsan-si, Gyeongsangbuk-do 38459 (KR)
(72) Inventor: KIM, Young Deok, Seoul 06734 (KR); BYEON, Eul Chul, Seoul 06734 (KR); OH, Kyung Hwan, Seoul 06734 (KR); CHOI, Won Jong, Gyeongsan-si Gyeongsangbuk-do 38459 (KR)
(74) Representative: Johnstone, Douglas Ian
(86) International application number: PCT/KR2015/008582
(87) International publication number: WO 2016/028047

(56) References cited:
- EP-A1- 2 620 757
- EP-A2- 2 390 641
- WO-A1-2009/153741
- DE-A1-102012 220 032
- JP-A- H10 332 519
- JP-A- 2006 266 869
- JP-A- 2013 062 060
- KR-A- 20050 002 232
- KR-A- 20110 088 173
- KR-A- 20120 077 210
- KR-A- 20120 077 210
- KR-A- 20140 042 209
- US-A- 5 181 417
- US-A1- 2004 007 073

## Description

### Technical Field

The present disclosure relates to a pressure sensor.

### Background Art

A pressure sensor refers to a device configured to sense or measure a pressure. For example, the pressure sensor may detect information for controlling a brake system. In general, the brake system is provided in a vehicle to reduce a speed of the vehicle or brake the vehicle. The brake system may include a pedal configured to transfer an operation force of a user, a booster and a master cylinder connected to the pedal and configured to form a brake pressure, and a wheel brake configured to brake a wheel of the vehicle based on the brake pressure input from the booster and the master cylinder.

In such a brake system, when a driver steps on a brake pedal and a braking force is generated, a tire of a vehicle may slip on a road in response to a frictional force generated in a wheel brake due to a brake pressure being greater than a braking force generated on the road. When a brake operates in such a case, a steering system may be locked and the vehicle may not steer in a desired direction.

In related arts, an anti-lock brake system (ABS) configured to electronically control a pedal effect of a brake to enable steering despite a slip is developed. The ABS may include a plurality of solenoid valves configured to adjust a brake pressure to be transferred to a wheel brake, a hydraulic unit including a low-pressure accumulator and a high-pressure accumulator, and an electronic control unit (ECU) configured to control components that electrically operate. In addition, the hydraulic unit may include a pressure sensor configured to detect a brake operating pressure generated in a master cylinder in proportion to a brake pedal effect, and transfer the detected brake operating pressure as an electrical signal to the ECU. The ECU may then control an operation of the brake based on the electrical signal transferred from the pressure sensor.

A prior art pressure sensor assembly is disclosed in patent EP 2390641 A2. The sensor assembly includes a body with a port for communication with pressurized fluid and a face disposed perpendicular to a longitudinal axis of the sensor assembly on which silicon strain gauges are mounted. A housing surrounds and is connected to a part of the body and supports, by means of mounting tabs, a circuit board which is also arranged perpendicular to the longitudinal axis of the sensor assembly. The silicon sensors are connected by wires, which extend through a wire-bond window in the circuit board to wire-bond pads on the circuit board. The sensor assembly also includes resilient contact springs with spring tip contacts which engage contact pads on the circuit board. The contact springs are held by a contact housing sub-assembly which is connected to the housing.

A further prior art sensor assembly is disclosed in patent US 2004/0007073 A1, which includes a body with a face to which sensors are attached and which is arranged perpendicular to a longitudinal axis of the sensor assembly. The sensors are connected to a portion of a flexible circuit which is also arranged perpendicular to a longitudinal axis of the sensor assembly. A still further sensor assembly is disclosed in patent KR 2012 0077210 A in which both a sensor mounting face to which sensors are attached and a circuit board to which the sensors are connected are arranged perpendicular to a longitudinal axis of the sensor assembly. A resilient terminal is disclosed in patent JP 2013-062060 A which is formed by punching a serpentine member and then folding edges of the serpentine member around towards each other.

A still further prior art pressure sensor (on which the preamble of claim 1 is based) is disclosed in patent WO 2009/153741. The sensor includes a first body with a port for communicating with a fluid, the pressure of which is to be sensed. The port communicates with a chamber. A pressure sensing device, mounted directly on a printed circuit board, is exposed to pressure in the chamber and protected from the fluid by a protective material such as a gel. Terminals, which are moulded into a second body connected to the first body, and which have connection ends which electrically engage the printed circuit board may be provided. The printed circuit board may be positioned parallel to a longitudinal axis of the first and second bodies.

### Disclosure

### Technical Goals

An aspect of the present disclosure provides a pressure sensor that is small in volume.

### Technical Solutions

According to the invention there is provided a pressure sensor according to claim 1.

The terminal includes a contactor configured to come into contact with the contact point of the external device and receive a pressing force from the contact point of the external device, and a connector disposed on a lower side of the contactor and electrically connected to the substrate.

The contactor may protrude out of an upper side of the terminal holder.

The connector may be resiliently connected to a contact point formed on the substrate.

The connector may be soldered to the contact point formed on the substrate.

The terminal includes a resilient portion configured to connect the contactor and the connector, which is resiliently transformed by the pressing force applied to the contactor by the contact point of the external device.

The terminal may be provided in an integral form through a punching process and a bending process performed on a metal plate, and the resilient portion may be provided in a form in which a wire material extends upwards and downwards having been repetitively bent leftwards and rightwards at a time of punching, and of which a bent portion bent leftwards and rightwards at the time of punching faces another portion of the resilient portion through the bending process.

The resilient portion may be provided in a form in which a distance d1 in one bent portion in an inner upward and downward direction at the time of punching the wire material used to form the resilient portion is less than a distance d2 between neighboring bent portions adjacent to each other and extending in an upward and downward direction at the time of punching the wire material.

The sensor module includes a sensing port disposed in an inflow side of the passage and including a port exposed externally, and a sensing body connected to the sensing port and disposed in the housing or the frame. The sensing body includes a sensing face to which the strain gauge is attached.

The sensing face is formed to be flat in a direction parallel to a longitudinal direction of the housing.

The substrate is disposed in a direction parallel to the sensing face.

The substrate includes an opening overlapping the sensing face, and further includes a wire configured to electrically connect the substrate and the strain gauge through the opening.

A thickness of the sensing face may be less than a thickness of another face of the sensing body.

The substrate may include a first substrate disposed in a direction vertical to the longitudinal direction of the housing and connected to the strain gauge, and a second substrate disposed in a direction parallel to the longitudinal direction of the housing and electrically connected to the first substrate and the terminal.

The frame and the substrate may form a closed loop covering a circumference of the sensing body of the sensing module.

The frame may include at least one supporting protrusion configured to support a side face of the substrate, and the substrate may include a supporting groove to be fastened to the supporting protrusion.

An upper side of the substrate includes a terminal hole into which the connector is inserted.

The terminal hole may be elongatedly formed in a longitudinal direction of the substrate.

An end portion of the connector extends in a direction vertical to the substrate to be inserted into the terminal hole.

A width direction of the end portion of the connector may be equal to the longitudinal direction of the housing.

### Advantageous Effects

According to example embodiments, reducing a volume of a pressure sensor and also a volume of an entire product in which the pressure sensor is provided may be enabled.

### Brief Description of Drawings

FIG. 1 is a perspective view of a pressure sensor according to a first example not according to the invention.
FIG. 2A is an exploded perspective view of a pressure sensor according to the first example.
FIG. 2B is an enlarged view of a portion of a pressure sensor according to the first example.
FIG. 3 is a cross-sectional view of a pressure sensor according to the first example.
FIGS. 4A and 4B are views illustrating a terminal according to the first example.
FIG. 5 is a perspective view of a pressure sensor according to a second example not according to the invention.
FIG. 6 is an exploded perspective view of a pressure sensor according to the second example.
FIG. 7 is a cross-sectional view of a pressure sensor according to the second example.
FIG. 8 is a perspective view of a pressure sensor according to a third example not according to the invention.
FIG. 9 is an exploded perspective view of a pressure sensor according to the third example.
FIG. 10 is a perspective view of a structure in which a first substrate and a second substrate are connected to each other according to the third example.
FIG. 11 is a cross-sectional view of a pressure sensor according to the third example.
FIG. 12 is a perspective view of a pressure sensor according to a fourth example not according to the invention.
FIG. 13 is an exploded perspective view of a pressure sensor according to the fourth example.
FIG. 14 is an exploded perspective view of a structure in which a frame and a substrate are connected to each other according to the fourth example.
FIG. 15 is a cross-sectional view of a pressure sensor according to the fourth example.
FIGS. 16A and 16B are views illustrating a structure in which a terminal holder and a housing are connected to each other according to the fourth example.
FIG. 17 is a perspective view of a pressure sensor according to a fifth example embodiment according to the invention .
FIG. 18 is an exploded perspective view of a pressure sensor according to the fifth example embodiment.
FIG. 19 is a cross-sectional view of a pressure sensor according to the fifth example embodiment.
FIGS. 20A and 20B are views illustrating a terminal according to the fifth example embodiment.
FIG. 21 is a perspective view of a structure in which a substrate and a terminal are connected to each other according to the fifth example embodiment.
FIG. 22 is a perspective view of a pressure sensor according to a sixth example not according to the invention.
FIG. 23 is an exploded perspective view of a pressure sensor according to the sixth example.
FIG. 24 is a cross-sectional view of a pressure sensor according to the sixth example.

### Best Mode for Carrying Out the Invention

Hereinafter, some example embodiments will be described in detail with reference to the accompanying drawings. Regarding the reference numerals assigned to the elements in the drawings, it should be noted that the same elements will be designated by the same reference numerals, wherever possible, even though they are shown in different drawings. It should be understood, however, that there is no intent to limit this disclosure to the particular example embodiments disclosed.

Terms such as first, second, A, B, (a), (b), and the like may be used herein to describe components. Each of these terminologies is not used to define an essence, order or sequence of a corresponding component but used merely to distinguish the corresponding component from other component(s). It should be noted that if it is described in the specification that one component is "connected," "coupled," or "joined" to another component, a third component may be "connected," "coupled," and "joined" between the first and second components, although the first component may be directly connected, coupled or joined to the second component.

A component that is included in any one of example embodiments and performs a same function in other example embodiments may be referred to as a same name used in the one example embodiment and the other example embodiments. Unless otherwise defined, descriptions provided in one example embodiment are also applicable to other example embodiments and a more detailed and repeated description will be omitted within a scope that overlap between the example embodiments.

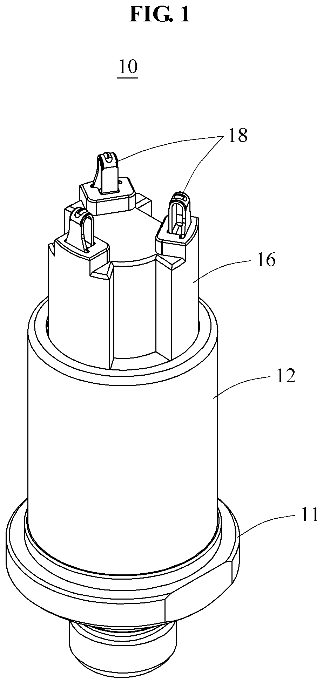

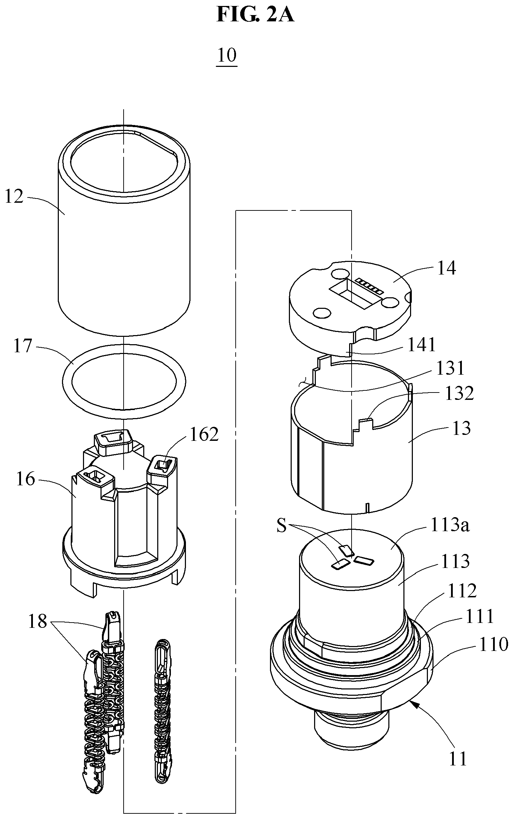

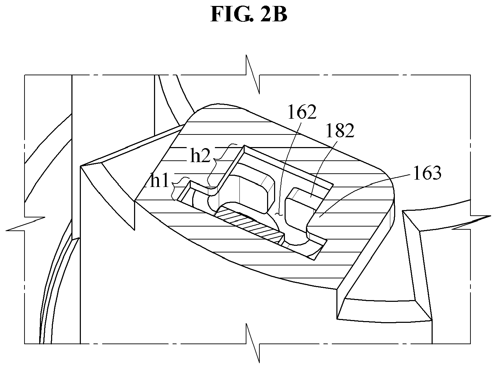

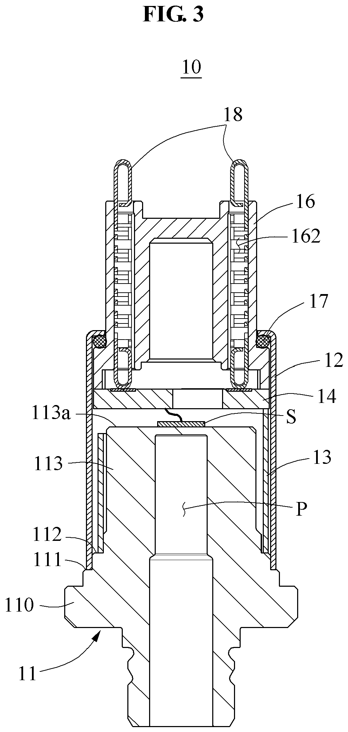

FIG. 1 is a perspective view of a pressure sensor according to a first example embodiment. FIG. 2A is an exploded perspective view of the pressure sensor according to the first example embodiment. FIG. 2B is an enlarged view of a portion of the pressure sensor according to the first example embodiment. FIG. 3 is a cross-sectional view of the pressure sensor according to the first example embodiment.

Referring to FIGS. 1 through 3, according to the first example embodiment, a pressure sensor 10 includes a sensor module 11, a housing 12, a frame 13, a substrate 14, a terminal holder 16, an o-ring 17, and a terminal 18.

The sensor module 11 may measure a pressure of a gas flowing into a passage P disposed therein. The sensor module 11 includes a sensing port 110, a sensing body 113, and a strain gauge S.

The sensing port 110 may be disposed in an inflow side of the passage P into which the gas flows, and includes a port exposed externally. The sensing port 110 may be connected to a target object for which a pressure is to be measured, and transfer a gas flowing from the target object to the sensing body 113. The sensing port 110 includes a housing support 111 and a frame support 112.

The housing support 111 may be provided in a stepped form to allow an end portion of the housing 12 to be placed. Similarly, the frame support 112 may be provided in a stepped form to allow an end portion of the frame 13 to be placed. A diameter of the frame support 112 may be smaller than a diameter of the housing support 111.

The sensing body 113 includes a passage to be connected to a passage provided in the sensing port 110. The sensing body 113 may be disposed in the housing 12 and/or the frame 13. Based on such a disposition, the sensing body 113 may be prevented from being damaged by an external force, and also prevented from being affected by an influence of another element, excluding the target object connected to the sensing port 110. Thus, accuracy in measurement performed by the sensor module 11 may be improved. The sensing body 113 includes a sensing plate 113a to which the strain gauge S is to be mounted. The sensing plate 113a may be provided in a flat form to improve accuracy in measurement performed by the strain gauge S. The sensing plate 113a may be provided opposite to the sensing port 110. The sensing plate 113a may be elongatedly disposed in a direction vertical to, for example, a longitudinal direction of the housing 12.

The housing 12 may form an outer shape of the pressure sensor 10. One side of the housing 12 may be connected to the sensor module 11, and another side to the terminal holder 16. The housing 12 may cover the frame 13, the sensing body 113, and/or the substrate 14 that are disposed between the sensor module 11 and the terminal holder 16. An upper side of the housing 12 may be bent inwards to cover a portion of the terminal holder 16. That is, the housing 12 may prevent the terminal holder 16 from being separated upwards. The housing 12 may be provided mostly in a cylindrical form, but a form of the housing 12 is not limited to the example described in the foregoing.

The frame 13 may be disposed inside the housing 12 and cover the sensing body 113. The frame 13 may cover the sensing body 113 by being separate from the sensing body 113 by a predetermined distance so that the sensing body 113 may not be affected by interference with another component. One side of the frame 13 may be connected to the substrate 14, and another side to the sensing port 110. The frame 13 may be formed of, for example, a metallic material. The frame 13 includes an accommodating groove 131 and a supporting protrusion 132 to support the substrate 14. The accommodating groove 131 may be provided in a form retracted from an end portion of an upper side of the frame 13. The supporting protrusion 132 may be provided in a form protruding from the end portion of the upper side of the frame 13.

The substrate 14 may receive a signal measured by the strain gauge S and externally transfer the received signal through the terminal 18. The substrate 14 and the strain gauge S may be connected to each other through a predetermined wire. The wire may be electrically connected to the terminal 18 that is to be connected to a contact point of the substrate 14 along an internal circuit formed in the substrate 14. The substrate 14 may be disposed on an upper side of the frame 13. The substrate 14 includes a connecting protrusion 141 and a connecting groove to be connected to the frame 13. The connecting protrusion 141 and the connecting groove may be connected to the accommodating groove 131 and the supporting protrusion 132, respectively.

The terminal holder 16 may support the terminal 18. The terminal holder 16 includes a terminal guide hole 162 to accommodate the terminal 18. A form of the terminal guide hole 162 may correspond to a form of the terminal 18. The terminal guide hole 162 may have a diameter corresponding to an external diameter of the terminal 18. Using the terminal guide hole 162, the terminal 18 may be prevented from being bent by a force transferred from a contact point of an external device to the terminal 18 when the terminal 18 comes into contact with the contact point of the external device. The terminal holder 16 may be disposed on an upper side of the substrate 14. At an upper end of the terminal holder 16, a shield 163 configured to shield a portion of the terminal guide hole 162 may be provided. The shield 163 may support an upper end of a resilient portion 182 of the terminal 18, and thus may prevent the terminal 18 from being separated out of an upper side of the terminal guide hole 162. From a portion that is not shielded by the shield 163, a contactor 181 of the terminal 18 may protrude. FIG. 2B illustrates a portion of the pressure sensor 10 from which the contactor 181 is omitted.

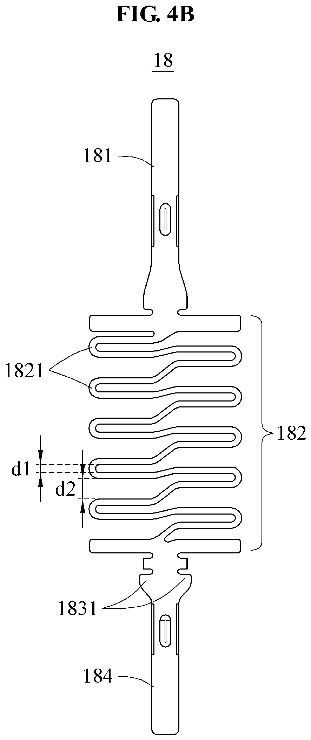

An upper face of the terminal holder 16 includes a T-shaped hole. As illustrated, the upper face of the terminal holder 16 may include a first hole h1 and a second hole h2 having different widths from each other. A width of the second hole h2 may be smaller than a width of the first hole h1 by a width of the shield 163. In addition, referring to FIG. 4B, the contactor 181 may include a portion having a width that is decreased as being separated farther from the resilient portion 182. A portion of the contactor 181 with a greater width as being closer to the resilient portion 182 may protrude, while being inserted, from the terminal guide hole 162 through the first hole h1 with a broad width that is not shielded by the shield 163. Also, an end portion of the contactor 181 may be inserted, while being folded back, into the terminal guide hole 162 through the second hole h2 with a narrower width than that of the first hole h1. Here, a width of the portion of the contactor 181 with the greater width that is adjacent to the resilient portion 182 may correspond to the width of the first hole h1. Based on such a form, the terminal 18 may be maintained at a predetermined position.

The o-ring 17 may be disposed between the terminal holder 16 and the housing 12. Using the o-ring 17 may improve a binding force between the terminal holder 16 and the housing 12, and prevent dust or water from penetrating between the terminal holder 16 and the housing 12. The o-ring 17 may be inserted into, for example, a stepped portion of the terminal holder 16.

The terminal 18 may transfer a signal transferred from the strain gauge S to the external device. The terminal 18 may be connected to the substrate 14 through the terminal holder 16. Here, one side of the terminal 18 may be connected to the substrate 14, and another side to the contact point of the external device. The terminal 18 may be elongatedly disposed along the longitudinal direction of the housing 12. The terminal 18 may be resiliently transformed along the longitudinal direction of the housing 12 to improve a contact force with the contact point of the external device. A detailed form of the terminal 18 will be described hereinafter.

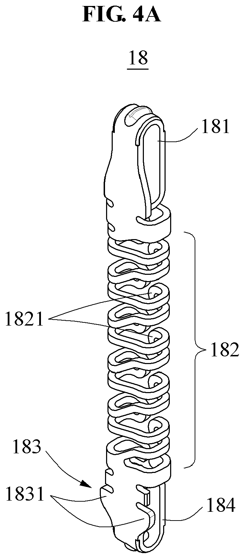

FIGS. 4A and 4B are views illustrating a terminal according to the first example embodiment. FIG. 4A is a perspective view of the terminal and FIG. 4B is a cross-sectional view of the terminal at a time of punching in a terminal manufacturing process.

Referring to FIGS. 4A and 4B, according to the first example embodiment, the terminal 18 may be provided in a form as illustrated in FIG. 4A through a process of punching and bending a metal plate. FIG. 4B illustrates a state of the terminal 18 before the bending process is performed after the punching process is performed in the terminal manufacturing process. In FIG. 4B, a plate to be punched to be a form of the terminal 18 that is obtainable after the bending process is performed is indicated using a same reference numeral as that obtained after the bending process is performed, although not being used as a contact before the bending process, and a description will be provided using a name after the bending process.

The terminal 18 may be punched to be the form as illustrated in FIG. 4B, and then bent to be the form as illustrated in FIG. 4A. The contractor 181 may be provided on an upper side of the terminal 18, and the resilient portion 182 may be provided on a lower side of the contactor 181. In addition, a fastener 183 and/or a connector 184 may be provided on a lower side of the resilient portion 182.

The contactor 181 may protrude out of an upper side of the terminal holder 16 to come into contact with the contact point of the external device, and receive a pressing force from the contact point of the external device.

The resilient portion 182 may be resiliently transformed when the contactor 181 receives the pressing force from the contact point of the external device.

The fastener 183 may be pressed in the terminal holder 16 when the terminal 18 is inserted in the terminal holder 16, and then pressed on an inner wall of the terminal holder 16, and thus may allow the terminal 18 to be fixed at a predetermined position. A pressing protrusion 1831 may be provided at an endmost edge of the fastener 183.

The connector 184 may be extended in a direction of a lower side of the terminal holder 16 from the resilient portion 182 or the fastener 183, and electrically connected to the substrate 14.

The resilient portion 182 may be provided in a form in which a wire material is extended upwards and downwards, while being formed with repetitive leftwards and rightwards bends, at a time of punching as illustrated in FIG. 4B. Through the bending process performed on the resilient portion 182, a bend portion 1821, which is formed leftwards and rightwards at the time of punching as illustrated in FIG. 4A, may be bent to face another portion of the resilient portion 182.

The resilient portion 182 may be extended and contracted at each time the contactor 181 is pressed on the contact point of the external device. Thus, when a fracture surface of the terminal 18 formed in the punching process comes into contact with the inner wall of the terminal holder 16, an inner wall surface of the terminal holder 16 may be repetitively affected thereby, and thus durability may deteriorate. However, according to the example embodiment, when the bent portion 1821 is formed to face another portion of the resilient portion 182, an influence of the fracture surface on the inner wall surface of the terminal holder 16 may be reduced although the resilient portion 182 is extended and contracted, and thus the durability may be improved. In addition, when the resilient portion 182 is bent as illustrated in FIG. 4A, the terminal 18 may become smaller, and accordingly the pressure sensor 10 may be smaller.

Although the bent portion 1821 is formed to face the other portion, the bent portion 1821 may be bent more deeply when a space is available.

In addition, the resilient portion 182 may have the following characteristic associated with a distance with respect to the wire material used to form the resilient portion 182. As illustrated in FIG. 4B, a distance in one bent portion 1821 in an inner upward direction and an inner downward direction at the time of punching to form the resilient portion 182 is d1, and a distance between two bent portions 1821 that are adjacent to each other upwards and downwards at the time of punching is d2. Here, d2 may be greater than d1.

When the resilient portion 182 is compressed by being pressed on the contact point of the external device, the bent portion 1821 may have a relatively high rigidity, and the rigidity may act as a deformation resistance. That is, when the resilient portion 182 is compressed, and an inner side (for example, a measure of d1 portion) and an outer side (for example, a measure of d2 portion) of the bent portion 1821 are compared to each other, the inner side may be more compressed upwards and downwards compared to the outer side. Thus, when d1 and d2 are designed to be equal to each other, no further compression may occur because the wire material is in contact first in the outer side (or the measure of d2 portion). However, when d2 is designed to be greater than d1, a more deformation in a smaller resilient portion 182 may be obtained compared to the case in which d1 and d2 are designed to be equal to each other. However, the case in which d1 and d2 are designed to be equal to each other is not excluded from the present disclosure.

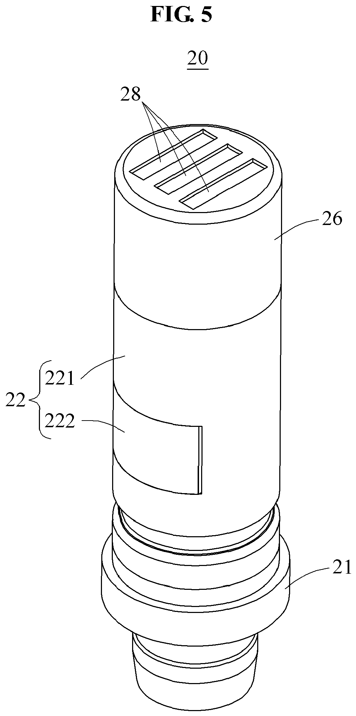

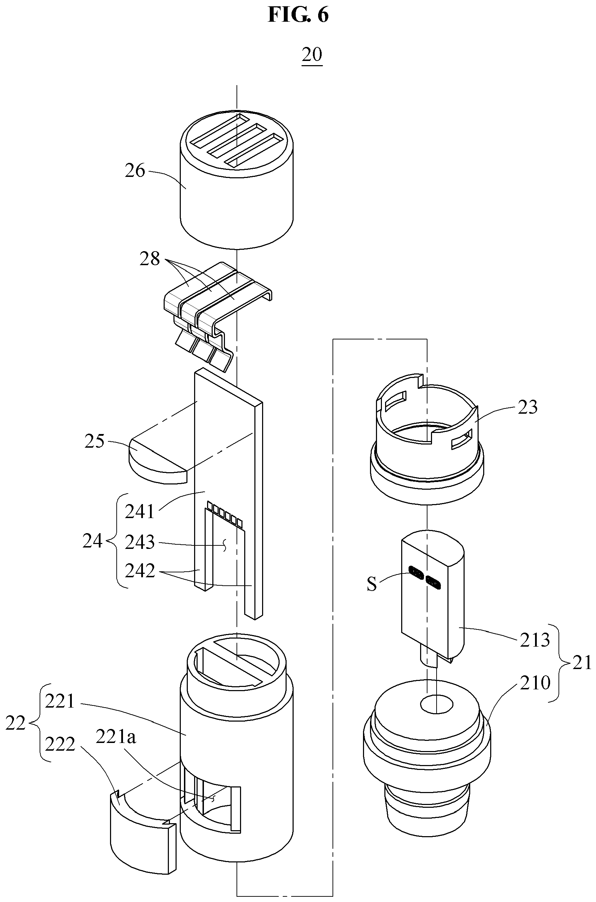

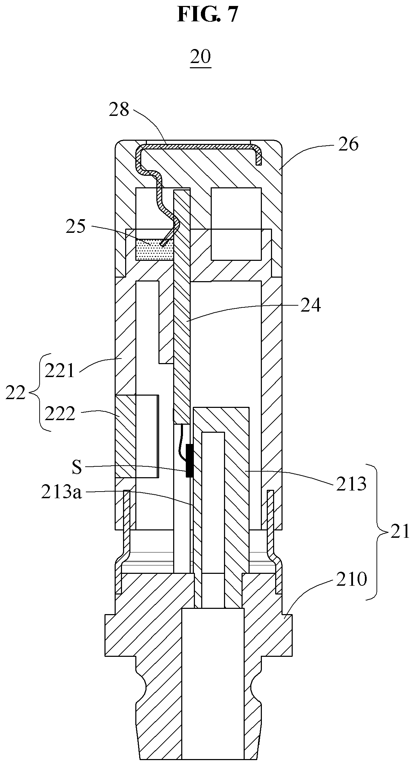

FIG. 5 is a perspective view of a pressure sensor according to a second example embodiment. FIG. 6 is an exploded perspective view of the pressure sensor according to the second example embodiment. FIG. 7 is a cross-sectional view of the pressure sensor according to the second example embodiment.

Referring to FIGS. 5 through 7, a pressure sensor 20 according to the second example embodiment includes a sensing module 21 including a sensing port 210, a sensing body 213, and a strain gauge S, a housing 22, a frame 23, a substrate 24, a support 25, a terminal holder 26, and a terminal 28.

The sensing body 213 of the sensing module 21 includes a sensing face 213a that is flat and disposed on a side face of the sensing body 213. The sensing face 213a may be disposed in parallel to the substrate 24. For example, the sensing body 213 may be provided in a form of a column of which a cross-sectional face is formed in a semicircular shape. A thickness of the sensing face 213a may be less than a thickness of another face of the sensing body 213. Based on such a form, a degree of deformation or transformation of the sensing face 213a may be greater than a degree of deformation of the other face, and thus a sensitivity of the strain gauge S provided in the sensing face 213a may be improved.

The housing 22 includes a housing body 221 including a working hole 221a on one side, and a housing cover 222 provided on the working hole 221a. The working hole 221a may allow at least a portion of the sensing body 213, for example, an upper side, to be externally exposed. By the working hole 221a, wire bonding performed to electrically connect the strain gauge S and the substrate 24 may be more readily performed while the sensing module 21, the frame 23, the substrate 24, and the housing body 221 are being connected. After the wire bonding is performed, the housing cover 222 may be provided to the working hole 221a, and thus prevent the sensing module 21 from being externally exposed. For example, the housing cover 222 may be connected to the working hole 221a through laser welding.

A substrate supporting groove configured to support the substrate 24 in a longitudinal direction may be provided on an inner wall of the housing body 221. The substrate supporting groove may be elongatedly formed along a longitudinal direction of the housing body 221. By such a structure, the substrate 24 may be stably supported.

The substrate 24 may be elongatedly disposed along a longitudinal direction of the pressure sensor 20. Based on such a disposition, the pressure sensor 20 may become smaller in size. The substrate 24 may need to have a predetermined area to secure a space for mounting a circuit or an electronic element to the substrate 24. Thus, when the substrate 24 is disposed in a direction vertical to the longitudinal direction of the pressure sensor 20, a diameter of the pressure sensor 20 may be increased by the area of the substrate 24, and thus a volume of the pressure sensor 20 may be unnecessarily increased. However, as described above, when the substrate 24 is elongatedly disposed along the longitudinal direction of the pressure sensor 20, an unnecessary volume may be minimized, and thus the volume of the pressure sensor 20 may be reduced.

The substrate 24 includes a mounting portion 241 to which an internal circuit is to be mounted to form an electrical connection between the strain gauge S and the terminal 28, a leg portion 242 configured to support the substrate 24 from the sensing module 21, and an opening 243 overlapping a portion of a side face of the sensing body 213.

The leg portion 242 may be extended downwards from the mounting portion 241. The leg portion 242 may be disposed in both sides with the opening 243 being at a center therebetween. That is, the opening 243 may be defined as a space between two legs of the leg portion 242.

The opening 243 may overlap at least a portion of the sensing face 213a. Based on such a form, the electrical connection between the substrate 24 and the strain gauge S may be more readily performed in a state in which the substrate 24, the housing body 221, and the sensor module 21 are connected.

The support 25 may be disposed between one face of the substrate 24 and an inner wall of the housing body 221 so that the substrate 24 may be stably supported in the housing body 221. The support 25 may be formed of, for example, silicon epoxy.

The terminal holder 26 may support the terminal 28. The terminal holder 26 includes a terminal support of which a form corresponds to a form of the terminal 28. The terminal holder 26 may be fixed to an upper side of the housing body 221 to prevent the terminal 28 from being externally separated. On an upper face of the terminal holder 26, at least one terminal hole configured to allow the terminal 28 to be externally exposed may be formed. The terminal hole may be formed to be smaller than an area of the upper face of the terminal 28 so that the terminal 28 may not protrude externally. Based on such a form, damage that may be done to the terminal 28 while transporting the pressure sensor 20 may be minimized, or the terminal 28 may not be damaged, without an additional protection member.

The terminal 28 may be provided in a form bent a plurality of times as illustrated in FIG. 7. Based on such a form, the terminal 28 may obtain resilience when the terminal 28 is in contact with a contact point of an external device, and thus a electrical connection may be secured.

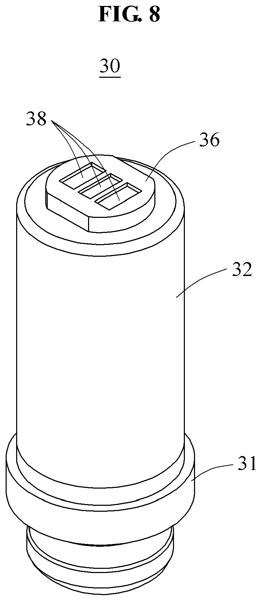

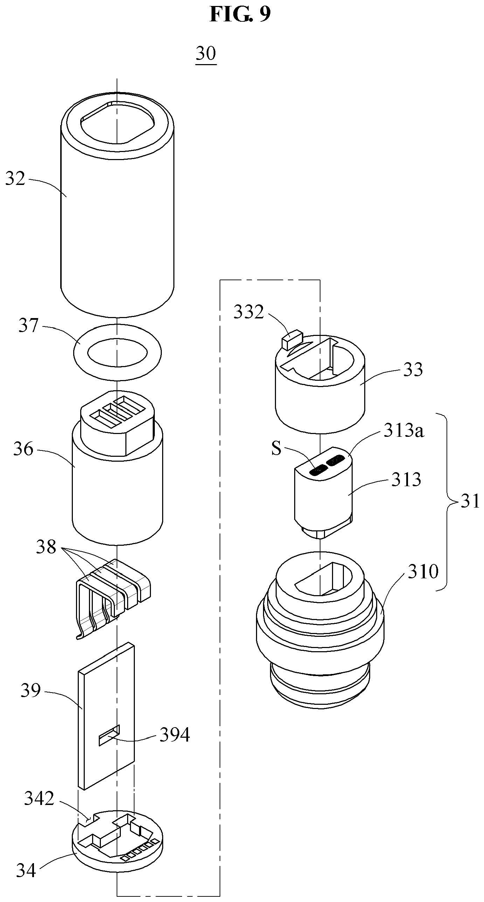

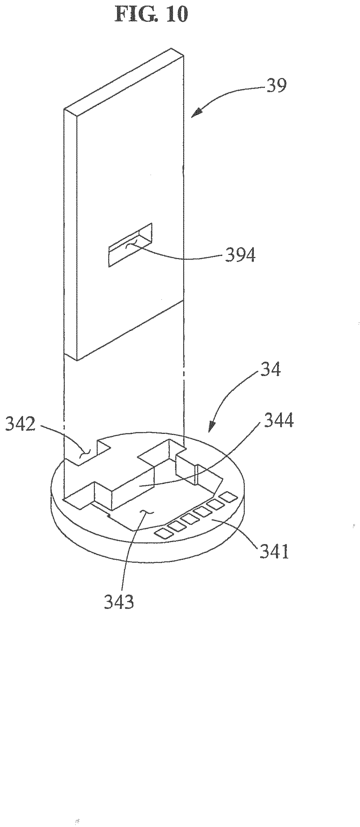

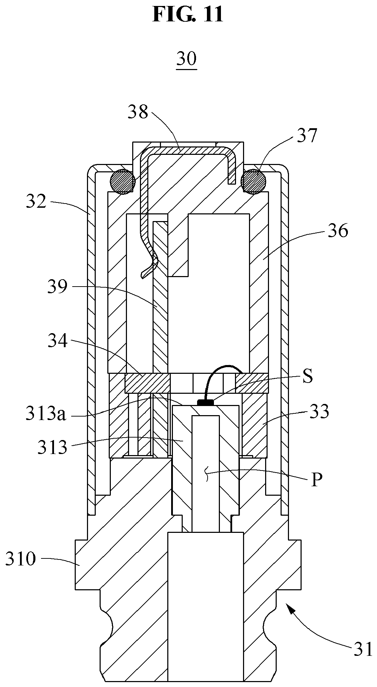

FIG. 8 is a perspective view of a pressure sensor according to a third example embodiment. FIG. 9 is an exploded perspective view of the pressure sensor according to the third example embodiment. FIG. 10 is a perspective view of a structure in which a first substrate and a second substrate are connected to each other according to the third example embodiment. FIG. 11 is a cross-sectional view of the pressure sensor according to the third example embodiment.

Referring to FIGS. 8 through 11, according to the third example embodiment, a pressure sensor 30 includes a sensing module 31 including a sensing port 310, a sensing body 313, and a strain gauge S, a housing 32, a frame 33, a first substrate 34, a second substrate 39, a terminal holder 36, an o-ring 37, and a terminal 38. The sensing body 313 includes a sensing face 313a that is flat and disposed on an upper face of the sensing body 313.

The frame 33 may support the first substrate 34 and/or the second substrate 39. An upper side of the frame 33 may support the first substrate 34. The frame 33 includes a supporting protrusion 332 configured to support the first substrate 34. In an inner wall of the frame 33, a substrate supporting groove may be formed to support the second substrate 39 in a longitudinal direction.

The first substrate 34 may be disposed on the upper side of the frame 33. The first substrate 34 may be disposed in a direction vertical to a longitudinal direction of the housing 32. The first substrate 34 includes an opening overlapping the sensing face 313a, a supporting groove 342 to be fastened to the supporting protrusion 332, and a fitting protrusion 344 to be fastened to the second substrate 39. The supporting groove 342 may be provided in a form retracted inwards from a circumference of the first substrate 34. The fitting protrusion 344 may protrude from a wall on one side of the opening. By the opening of the first substrate 34, an electrical connection between the first substrate 34 and the strain gauge S may be readily formed in a state in which the first substrate 34, the housing 32, and the sensor module 31 are connected.

The second substrate 39 may be disposed in a direction crossing the first substrate 34. The second substrate 39 may be disposed in a direction parallel to the longitudinal direction of the housing 32. Based on such a form, a circuit and/or an electronic element that is needed for the first substrate 34 and the second substrate 39 may be distributively disposed, and thus an area of the first substrate 34 may be reduced and an entire volume of the pressure sensor 30 may be accordingly reduced. The second substrate 39 includes a fitting groove 394 to be fastened to the fitting protrusion 344. The second substrate 39 and the first substrate 34 may be electrically connected to each other by a contact point formed between the fitting groove 394 and the fitting protrusion 344. Also, the second substrate 39 and the first substrate 34 may be electrically connected through an additional wire bonding.

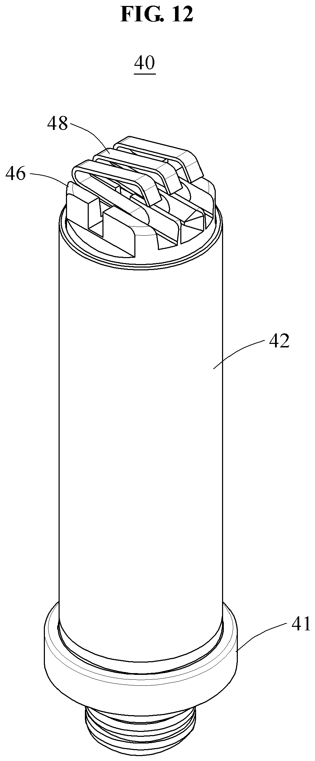

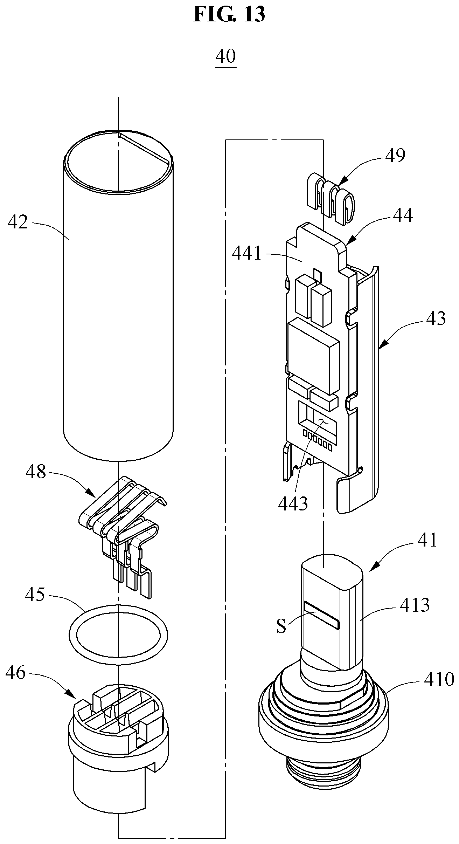

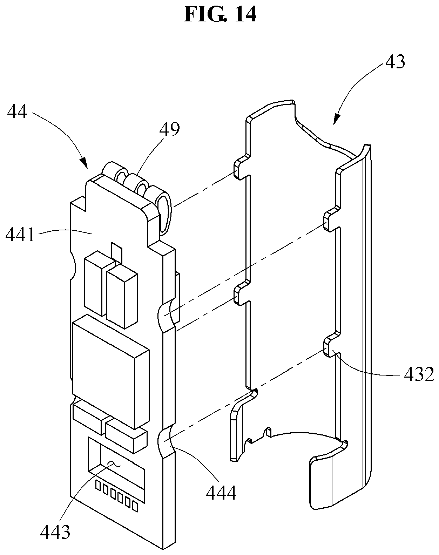

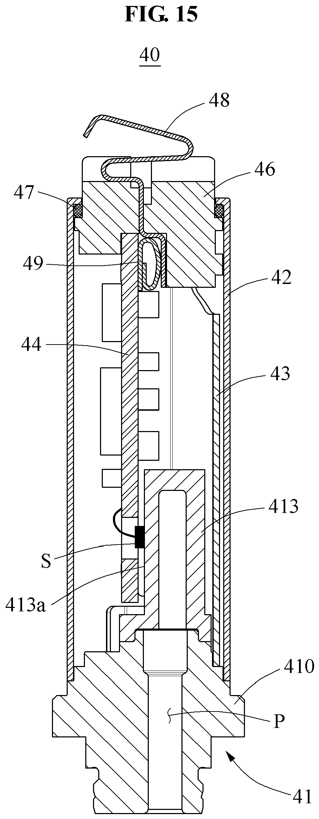

FIG. 12 is a perspective view of a pressure sensor according to a fourth example embodiment. FIG. 13 is an exploded perspective view of the pressure sensor according to the fourth example embodiment. FIG. 14 is an exploded perspective view of a structure in which a frame and a substrate are connected to each other according to the fourth example embodiment. FIG. 15 is a cross-sectional view of the pressure sensor according to the fourth example embodiment.

Referring to FIGS. 12 through 15, according to the fourth example embodiment, a pressure sensor 40 includes a sensing module 41 including a sensing port 410, a sensing body 413, and a strain gauge S, a housing 42, a frame 43, a substrate 44, an o-ring 45, a terminal holder 46, a first terminal 48, and a second terminal 49. The sensing body 413 includes a sensing face 413a that is flat and disposed on a side face of the sensing body 413.

The frame 43 may support the substrate 44 in a longitudinal direction of the housing 42. The frame 43 includes at least one supporting protrusion 432 to support a side face of the substrate 44. In a state in which the sensor module 41, the frame 43, and the substrate 44 are connected, the frame 43 and the substrate 44 may form a closed loop that covers a circumference of the sensing body 413.

The substrate 44 includes a mounting portion 441, an opening 443 overlapping the sensing face 413a, and a supporting groove 444 to be fastened to the supporting protrusion 432.

The first terminal 48 may be provided in a form bent a plurality of times as illustrated in FIG. 15. Based on such a form, the first terminal 48 may obtain resilience when the first terminal 48 comes into contact with a contact point of an external device, and thus an electrical connection may be performed. An upper side of the first terminal 48 may protrude out of an upper side of the terminal holder 46.

The second terminal 49 may be provided on an upper side of the substrate 44. The second terminal 49 may be provided in a form bent a plurality of times, and thus have resilience. The second terminal 49 may electrically connect the first terminal 48 and the substrate 44. By the second terminal 49, the electrical connection between the first terminal 48 and the substrate 44 may be readily performed. In detail, in a state in which the second terminal 49 is installed on the substrate 44 and the terminal holder 46 in which the first terminal 48 is inserted is connected thereto, a lower side portion of the first terminal 48 may be resiliently connected to the second terminal 49, and thus an electrical connection of the first terminal 48, the second terminal 49, and the substrate 44 may be readily performed.

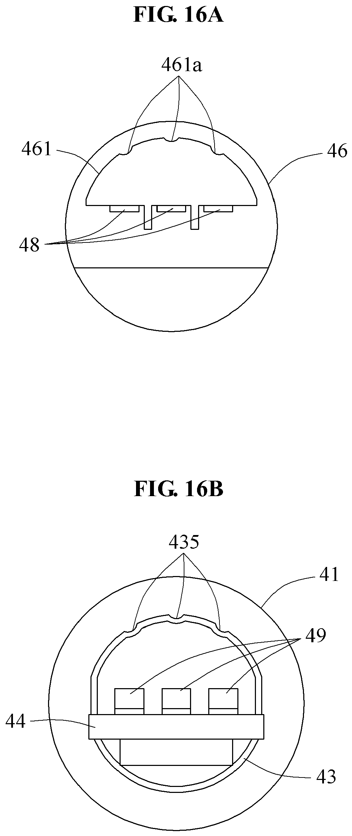

FIGS. 16A and 16B are views illustrating a structure in which a terminal holder and a housing are connected to each other according to the fourth example embodiment.

Referring to FIGS. 16A and 16B, the frame 43 includes a first curved portion 435 formed on an upper side of the frame 43. The terminal holder 46 includes an insertion portion 461 to be inserted into the frame 43, and the insertion portion 461 includes a second curved portion 461a corresponding to the first curved portion 435. By such a form, an accurate position at which the frame 43 and the terminal holder 46 are to be connected may be guided, and thus rotation of the frame 43 and the terminal holder 46 relative to each other may be prevented. Thus, the first terminal 48 and the second terminal 49 may be appropriately connected to each other.

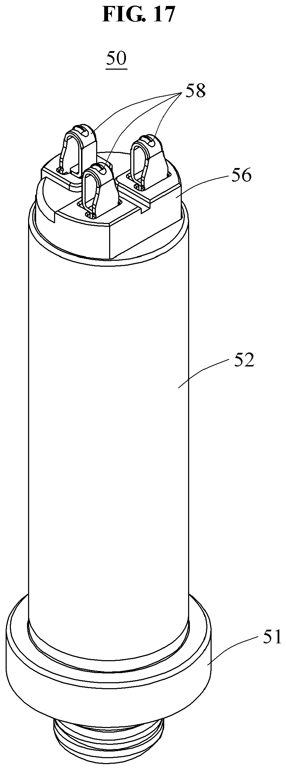

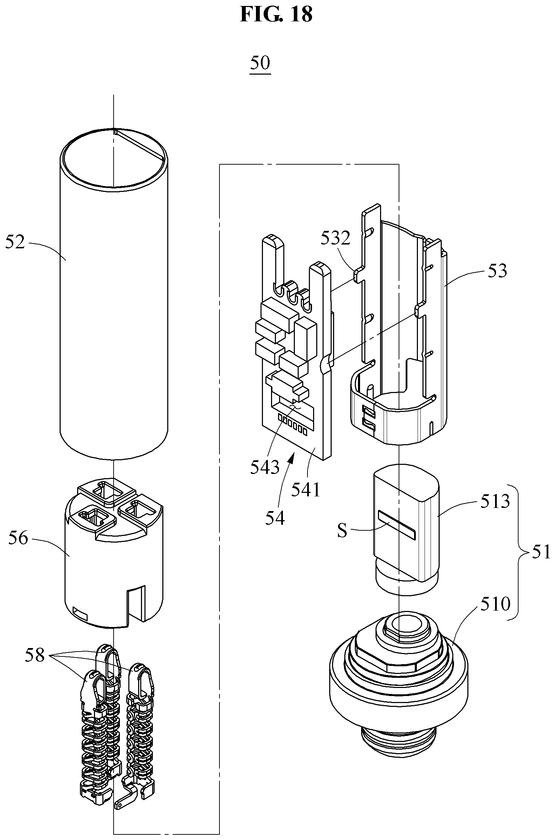

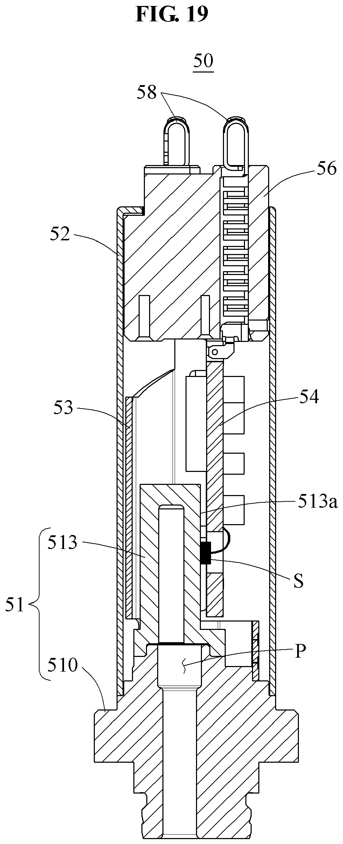

FIG. 17 is a perspective view of a pressure sensor according to a fifth example embodiment. FIG. 18 is an exploded perspective view of the pressure sensor according to the fifth example embodiment. FIG. 19 is a cross-sectional view of the pressure sensor according to the fifth example embodiment.

Referring to FIGS. 17 through 19, according to the fifth example embodiment, a pressure sensor 50 includes a sensor module 51 including a sensing port 510, a sensing body 513, and a strain gauge S, a housing 52, a frame 53 including a supporting protrusion 532, a substrate 54 including a mounting portion 541 and an opening 543, a terminal holder 56, and a terminal 58. The sensing body 513 includes a sensing face 513a that is flat and disposed on a side face of the sensing body 513.

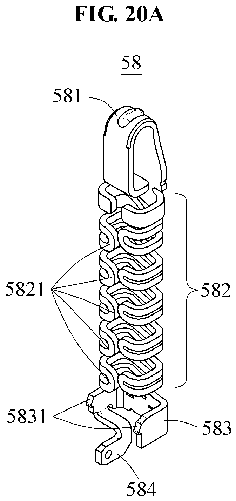

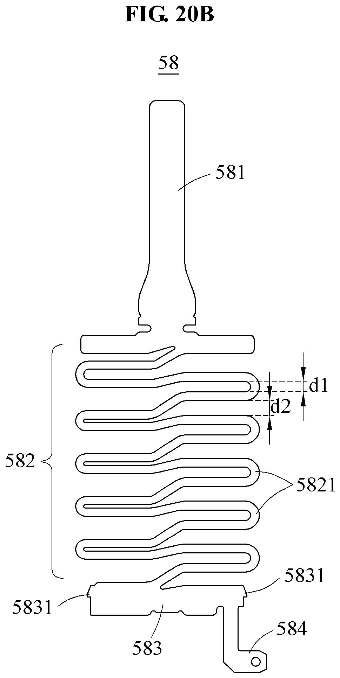

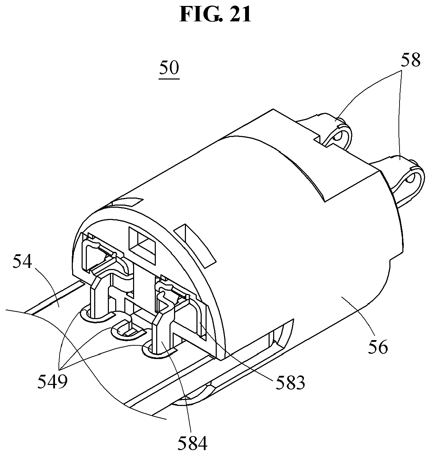

FIGS. 20A and 20B are views illustrating a terminal according to the fifth example embodiment. FIG. 21 is a perspective view of a structure in which a substrate and a terminal are connected to each other according to the fifth example embodiment. FIG. 20A is a perspective view of a terminal, and FIG. 20B illustrates a form of a terminal at a time of punching in a terminal manufacturing process.

Referring to FIGS. 20A through 21, according to the fifth example embodiment, the terminal 58 may be bent to be in a form as illustrated in FIG. 20A after being punched to be in a form as illustrated in FIG. 20B. A contactor 581 may be formed on an upper side of the terminal 58, and a resilient portion 582 may be formed on a lower side of the contactor 581. In addition, a fastener 583 and/or a connector 584 may be formed on a lower side of the resilient portion 582. The resilient portion 582 includes a bent portion 5821. The fastener 583 includes a pressing protrusion 5831.

As illustrated in FIG. 20A, an end portion of the connector 584 may be extended in a direction vertical to the substrate 54. A width direction of the end portion of the connector 584 may be equal to a length, or longitudinal, direction of the substrate 54. That is, the width direction of the end portion of the connector 584 may be equal to a length, or longitudinal, direction of the housing 52. As illustrated in FIG. 20B, in a state before the punching process is performed, the end portion of the connector 584 may be extended in a direction same as a longitudinal direction of the fastener 583. By such a form, the terminal 58 and the substrate 54 may be more strongly connected, and the connector 584 of the terminal 58 may be prevented from being separated from the substrate 54 by a force affecting the terminal 58 by a contact point of an external device.

As illustrated in FIG. 21, a terminal hole 549 into which the connector 584 is to be inserted may be formed on an upper side of the substrate 54. The terminal hole 549 may be elongatedly formed in the longitudinal direction of the substrate 54. The terminal hole 549 includes a contact point that is connectable to the connector 584. The connector 584 may be physically connected to the substrate 54 by being inserted into the terminal hole 549. Simultaneously, the connector 584 may be electrically connected to the substrate 54 by being connected to the contact point in the terminal hole 549. By such a structure, the substrate 54 may support the terminal 58, and thus a disconnection of the terminal 58 from the substrate 54 that may occur when the terminal 58 is pushed by a connecting force generated when the pressure sensor 50 is connected to the contact point of the external device may be prevented. For a strong connection between the connector 584 and the contact point in the terminal hole 549, a method, for example, soldering, may be used when the connector 584 is inserted in the terminal hole 549. Dissimilar to the illustration, the terminal hole 549 may not be additionally provided on the substrate 54. In such a case, the connector 584 may be connected through, for example, soldering, when the substrate 584 is placed on a contact point disposed on the substrate 54.

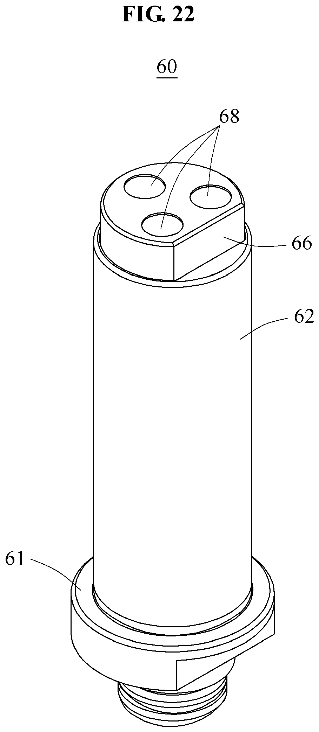

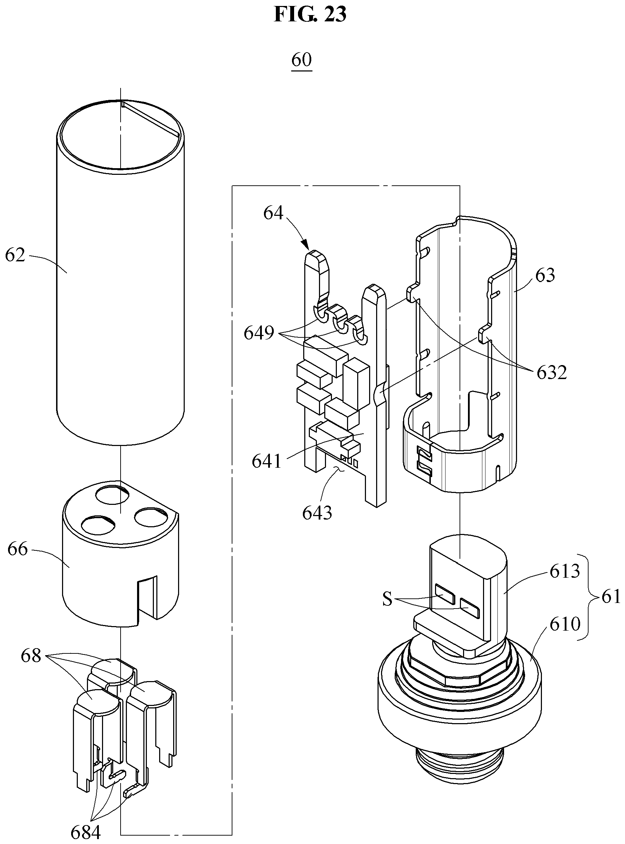

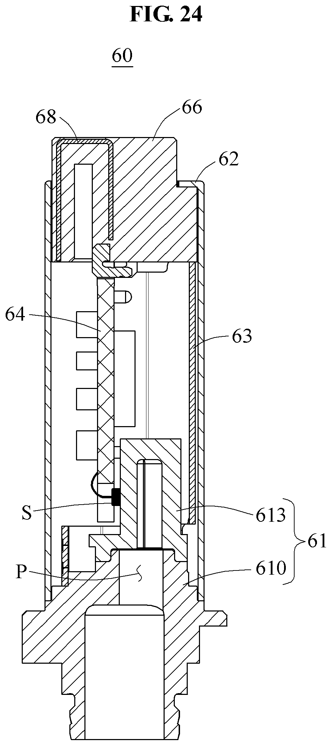

FIG. 22 is a perspective view of a pressure sensor according to a sixth example embodiment. FIG. 23 is an exploded perspective view of the pressure sensor according to the sixth example embodiment. FIG. 24 is a cross-sectional view of the pressure sensor according to the sixth example embodiment.

Referring to FIGS. 22 through 24, according to the sixth example embodiment, a pressure sensor 60 includes a sensing module 61 including a sensing port 610, a sensing body 613, and a strain gauge S, a housing 62, a frame 63 including a supporting protrusion 632, a substrate 64 including a mounting portion 641, an opening 643, and a terminal hole 649, a terminal holder 66, and a terminal 68.

The terminal 68 includes a connector 684 corresponding to the terminal hole 649. The terminal 68 may be externally exposed through a hole formed on an upper face of the terminal holder 66. As illustrated in FIG. 22, the terminal 68 may not protrude out of an upper side of the terminal holder 66. The hole formed on the upper face of the terminal holder 66 may be smaller than a width of an upper face of the terminal 68, or a contactor, and thus the terminal 68 may be prevented from being separated through the hole formed on the upper face of the terminal holder 66. That is, the contactor of the terminal 68 that comes into contact with a contact point of an external device may be supported by an inner wall of the upper face of the terminal holder 66.

While this disclosure includes specific examples, it will be apparent to one of ordinary skill in the art that various changes in form and details may be made in these examples without departing from the scope of the claims.

## Claims

1. A pressure sensor (50) comprising:
a sensor module (51) comprising: (a) a strain gauge (S) configured to measure a pressure of a gas flowing into a passage (P) formed therein; and (b) a sensing port (510) disposed in an inflow side of the passage (P) and comprising a port exposed externally;
a substrate (54) electrically connected to the strain gauge (S);
a frame (53) configured to cover at least a portion of the sensor module (51) and support the substrate (54);
a terminal (58) electrically connected to the substrate (54) and configured to come into contact with a contact point of an external device, the terminal (58) comprising: (a) a contactor (581) configured to come into contact with the contact point of the external device and receive a pressing force from the contact point of the external device; and (b) a connector (584) disposed on a lower side of the contactor (581) and electrically connected to the substrate (54); and
a terminal holder (56) configured to support the terminal (58);
wherein an upper side of the substrate (54) comprises a terminal hole (549) into which the connector (584) is inserted, and an end portion of the connector (584) extends in a direction vertical to the substrate (54) and is inserted into the terminal hole (549),
**characterised in that**:
the pressure sensor (50) further comprises a housing (52) of which one side is connected to the sensor module (51) or the frame (53) and another side is configured to cover at least a portion of the terminal holder (56);
the terminal (58) further comprises a resilient portion (582) configured to connect the contactor (581) and the connector (584), and be resiliently transformed by the pressing force applied to the contactor (581) by the contact point of the external device; and
the sensor module (51) further comprises a sensing body (513) connected to the sensing port (510) and disposed in the housing (52) or the frame (53), wherein the sensing body (513) comprises a sensing face (513a) to which the strain gauge (S) is attached, wherein the sensing face (513a) is formed to be flat in a direction parallel to a longitudinal direction of the housing (52), and wherein the substrate (54) is disposed in a direction parallel to the sensing face (513a).

2. The pressure sensor (50) of claim 1, wherein the contactor (581) protrudes out of an upper side of the terminal holder (56).

3. The pressure sensor (50) of claim 1, wherein the connector (584) is configured to be resiliently connected to a contact point formed on the substrate (54).

4. The pressure sensor (50) of claim 1, wherein the connector (584) is soldered to a contact point formed on the substrate (54).

5. The pressure sensor of claim 1, wherein the terminal (58) is provided in an integral form through a punching process and a bending process performed on a metal plate, and the resilient portion (582) is provided in a form in which a wire material extends upwards and downwards having leftwards and rightwards bends, and of which a bent portion (5821) bent leftwards and rightwards faces another portion of the resilient portion (582) through the bending process.

6. The pressure sensor (50) of claim 5, wherein the resilient portion (582) is provided in a form in which a distance d1 inside one bent portion (5821) in an inner upward and downward direction between two adjacent wire segments directly connected to the bent portion (5821) at the time of punching the wire material used to form the resilient portion is less than a distance d2 between neighboring bent portions (5821) adjacent to each other and extending in an upward and downward direction at the time of punching the wire material.

7. The pressure sensor (50) of claim 1, wherein the substrate comprises an opening (543) overlapping the sensing face (513a), and further comprises a wire configured to electrically connect the substrate (54) and the strain gauge (S) through the opening (543).

8. The pressure sensor (50) of claim 1, wherein a thickness of the sensing face (513a) is less than a thickness of another face of the sensing body (513).

9. The pressure sensor (50) of claim 1, wherein the frame (53) and the substrate (54) form a closed loop covering a circumference of a sensing body (513) of the sensor module (51).

10. The pressure sensor (50) of claim 9, wherein the frame (53) comprises at least one supporting protrusion (532) configured to support a side face of the substrate (54), and the substrate (54) comprises a supporting groove to be fastened to the supporting protrusion (532).

11. The pressure sensor (50) of claim 1, wherein the terminal hole (549) is elongatedly formed in a longitudinal direction of the substrate (54).

## Patentansprüche

1. Drucksensor (50), der Folgendes umfasst:
ein Sensormodul (51), das Folgendes umfasst: (a) einen Dehnungsmessstreifen (S), konfiguriert zum Messen eines Drucks eines in einen darin ausgebildeten Kanal (P) fließenden Gases; und (b) einen Erfassungsanschluss (510), der in einer Einlaufseite des Kanals (P) angeordnet ist und einen extern exponierten Anschluss umfasst;
ein Substrat (54), das elektrisch mit dem Dehnungsmessstreifen (S) verbunden ist;
einen Rahmen (53), konfiguriert zum Bedecken wenigstens eines Teils des Sensormoduls (51) und zum Tragen des Substrats (54);
eine Anschlussklemme (58), die elektrisch mit dem Substrat (54) verbunden und so konfiguriert ist, dass sie mit einem Kontaktpunkt eines externen Geräts in Kontakt kommt, wobei die Anschlussklemme (58) Folgendes umfasst: (a) einen Schütz (581), der so konfiguriert ist, dass er mit dem Kontaktpunkt des externen Geräts in Kontakt kommt und eine Druckkraft vom Kontaktpunkt des externen Geräts aufnimmt; und (b) einen Verbinder (584), der auf einer unteren Seite des Schützes (581) angeordnet und elektrisch mit dem Substrat (54) verbunden ist; und
einen Anschlussklemmenhalter (56), konfiguriert zum Tragen der Anschlussklemme (58);
wobei eine obere Seite des Substrats (54) ein Anschlussklemmenloch (549) aufweist, in das der Verbinder (584) gesteckt wird, und ein Endabschnitt des Verbinders (584) sich in einer Richtung vertikal zum Substrat (54) erstreckt und in das Anschlussklemmenloch (549) gesteckt wird,
**dadurch gekennzeichnet, dass**
der Drucksensor (50) ferner ein Gehäuse (52) umfasst, von dem eine Seite mit dem Sensormodul (51) oder dem Rahmen (53) verbunden ist und eine andere Seite zum Bedecken wenigstens eines Teils des Anschlussklemmenhalters (56) konfiguriert ist;
die Anschlussklemme (58) ferner einen elastischen Abschnitt (582) aufweist, der zum Verbinden des Schützes (581) und des Verbinders (584) und zum elastischen Verformen von der Druckkraft konfiguriert ist, die durch den Kontaktpunkt des externen Geräts auf den Schütz (581) aufgebracht wird; und
das Sensormodul (51) ferner einen Erfassungskörper (513) umfasst, der mit dem Erfassungsanschluss (510) verbunden und in dem Gehäuse (52) oder dem Rahmen (53) angeordnet ist, wobei der Erfassungskörper (513) eine Erfassungsfläche (513a) aufweist, an der der Dehnungsmessstreifen (S) angebracht ist, wobei die Erfassungsfläche (513a) so ausgebildet ist, dass sie in einer Richtung parallel zu einer Längsrichtung des Gehäuses (52) flach ist, und wobei das Substrat (54) in einer Richtung parallel zur Erfassungsfläche (513a) angeordnet ist.

2. Drucksensor (50) nach Anspruch 1, wobei der Schütz (581) aus einer oberen Seite des Anschlussklemmenhalters (56) vorsteht.

3. Drucksensor (50) nach Anspruch 1, wobei der Verbinder (584) so konfiguriert ist, dass er elastisch mit einem auf dem Substrat (54) ausgebildeten Kontaktpunkt verbunden ist.

4. Drucksensor (50) nach Anspruch 1, wobei der Verbinder (584) an einen auf dem Substrat (584) ausgebildeten Kontaktpunkt gelötet ist.

5. Drucksensor nach Anspruch 1, wobei die Anschlussklemme (58) in einer integralen Form durch einen an einem Metallblech ausgeführten Stanzprozess und Biegeprozess bereitgestellt wird und der elastische Abschnitt (582) in einer Form bereitgestellt wird, in der sich ein Drahtmaterial auf- und abwärts mit Links- und Rechtsbiegungen erstreckt, und von der ein nach links und rechts gebogener Abschnitt (5821) einem anderen Abschnitt des elastischen Abschnitts (582) durch den Biegeprozess zugewandt wird.

6. Drucksensor (50) nach Anspruch 5, wobei der elastische Abschnitt (582) in einer Form bereitgestellt wird, in der eine Distanz d1 innerhalb eines gebogenen Abschnitts (5821) in einer inneren Auf- und Abwärtsrichtung zwischen zwei benachbarten Drahtsegmenten, die zum Zeitpunkt des Stanzens des Drahtmaterials, das zum Bilden des elastischen Abschnitts benutzt wird, direkt mit dem gebogenen Abschnitt (5821) verbunden ist, kleiner ist als eine Distanz d2 zwischen zwei benachbarten gebogenen Abschnitten (5821) nebeneinander, die sich in einer Auf- und Abwärtsrichtung zum Zeitpunkt des Stanzens des Drahtmaterials erstrecken.

7. Drucksensor (50) nach Anspruch 1, wobei das Substrat eine Öffnung (543) aufweist, die die Erfassungsfläche (513a) überlappt, und ferner einen Draht umfasst, der so konfiguriert ist, dass er das Substrat (54) und den Dehnungsmessstreifen (S) durch die Öffnung (543) elektrisch verbindet.

8. Drucksensor (50) nach Anspruch 1, wobei eine Dicke der Erfassungsfläche (513a) geringer ist als eine Dicke einer anderen Fläche des Erfassungskörpers (513).

9. Drucksensor (50) nach Anspruch 1, wobei der Rahmen (53) und das Substrat (54) eine geschlossene Schleife bilden, die einen Umfang eines Erfassungskörpers (513) des Sensormoduls (51) bildet.

10. Drucksensor (50) nach Anspruch 9, wobei der Rahmen (53) wenigstens einen Stützvorsprung (532) umfasst, der zum Stützen einer Seitenfläche des Substrats (54) konfiguriert ist, und das Substrat (54) eine Stütznut zum Befestigen an dem Stützvorsprung (532) umfasst.

11. Drucksensor (50) nach Anspruch 1, wobei das Anschlussklemmenloch (549) in einer Längsrichtung des Substrats (54) länglich ausgebildet ist.

## Revendications

1. Capteur de pression (50) comprenant :
un module à capteur (51) comprenant : (a) une jauge extensométrique (S) configurée pour mesurer une pression d'un gaz coulant dans un passage (P) formé dans celle-ci ; et (b) un orifice de détection (510) disposé dans un côté d'admission du passage (P) et comprenant un orifice exposé à l'extérieur ;
un substrat (54) connecté électriquement à la jauge extensométrique (S) ;
un cadre (53) configuré pour couvrir au moins une partie du module à capteur (51) et soutenir le substrat (54) ;
une borne (58) connectée électriquement au substrat (54) et configurée pour entrer en contact avec un point de contact d'un dispositif externe, la borne (58) comprenant : (a) un contacteur (581) configuré pour entrer en contact avec le point de contact du dispositif externe et recevoir une force de pression en provenance du point de contact du dispositif externe ; et (b) un connecteur (584) disposé sur un côté inférieur du contacteur (581) et connecté électriquement au substrat (54) ; et
un support de borne (56) configuré pour soutenir la borne (58) ;
dans lequel un côté supérieur du substrat (54) comprend un trou de borne (549) dans lequel le connecteur (584) est inséré, et une partie d'extrémité du connecteur (584) s'étend suivant un sens vertical par rapport au substrat (54) et est insérée dans le trou de borne (549),
**caractérisé en ce que** :
le capteur de pression (50) comprend en outre un logement (52) dont un côté est connecté au module à capteur (51) ou au cadre (53) et un autre côté est configuré pour couvrir au moins une partie du support de borne (56) ;
la borne (58) comprend en outre une partie élastique (582) configurée pour connecter le contacteur (581) et le connecteur (584), et pour être transformée de manière élastique par la force de pression appliquée au contacteur (581) par le point de contact du dispositif externe ; et
le module à capteur (51) comprend en outre un corps de détection (513) connecté à l'orifice de détection (510) et disposé dans le logement (52) ou le cadre (53), dans lequel le corps de détection (513) comprend une face de détection (513a) à laquelle la jauge extensométrique (S) est attachée, dans lequel la face de détection (513a) est formée de façon à être plane dans un sens parallèle à un sens longitudinal du logement (52), et dans lequel le substrat (54) est disposé suivant un sens parallèle à la face de détection (513a).

2. Capteur de pression (50) de la revendication 1, dans lequel le contacteur (581) fait saillie hors d'un côté supérieur du support de borne (56).

3. Capteur de pression (50) de la revendication 1, dans lequel le connecteur (584) est configuré pour être connecté élastiquement à un point de contact formé sur le substrat (54) .

4. Capteur de pression (50) de la revendication 1, dans lequel le connecteur (584) est brasé à un point de contact formé sur le substrat (54).

5. Capteur de pression (50) de la revendication 1, dans lequel la borne (58) est prévue sous forme d'un seul tenant par l'intermédiaire d'un processus de poinçonnage et un processus de cintrage réalisés sur une plaque métallique, et la partie élastique (582) est prévue sous une forme dans laquelle un matériau de fil métallique s'étend vers le haut et vers le bas avec des courbures vers la gauche et vers la droite, et dont une partie recourbée (5821) recourbée vers la gauche et vers la droite fait face à une autre partie de la partie élastique (582) par l'intermédiaire du processus de cintrage.

6. Capteur de pression (50) de la revendication 5, dans lequel la partie élastique (582) est prévue sous une forme dans laquelle une distance d1 à l'intérieur d'une partie recourbée (5821) suivant un sens vers le haut et vers le bas interne entre deux segments de fil métallique adjacents directement connectés à la partie recourbée (5821) au moment du poinçonnage du matériau de fil métallique utilisé pour former la partie élastique est inférieure à une distance d2 entre des parties recourbées avoisinantes (5821) adjacentes l'une à l'autre et s'étendant suivant un sens vers le haut et vers le bas au moment du poinçonnage du matériau de fil métallique.

7. Capteur de pression (50) de la revendication 1, dans lequel le substrat comprend une ouverture (543) qui chevauche la face de détection (513a), et comprend en outre un fil métallique configuré pour connecter électriquement le substrat (54) et la jauge extensométrique (S) à travers l'ouverture (543).

8. Capteur de pression (50) de la revendication 1, dans lequel une épaisseur de la face de détection (513a) est inférieure à une épaisseur d'une autre face du corps de détection (513).

9. Capteur de pression (50) de la revendication 1, dans lequel le cadre (53) et le substrat (54) forment une boucle fermée couvrant une circonférence d'un corps de détection (513) du module à capteur (51).

10. Capteur de pression (50) de la revendication 9, dans lequel le cadre (53) comprend au moins une saillie de support (532) configurée pour soutenir une face latérale du substrat (54), et le substrat (54) comprend une rainure de support destinée à être fixée à la saillie de support (532).

11. Capteur de pression (50) de la revendication 1, dans lequel le trou de borne (549) est formé de manière allongée suivant un sens longitudinal du substrat (54).
